# EUROPEAN PATENT APPLICATION

(11) **EP 2 955 353 A1**
(43) Date of publication of application: **16.12.2015**
(21) Application number: 14172165.4
(22) Date of filing: 12.06.2014
(51) Int. Cl.: F02C 3/34, F02C 1/08, F02C 9/26

(54) **Method for operating a gas turbine with flue gas recirculation**

(71) Applicant: ALSTOM Technology Ltd, 5400 Baden (CH)
(72) Inventor: Guethe, Felix, 4056 Basel (CH); Alemela, Panduranga-Reddy, 5242 Birr (CH)
(74) Representative: Alstom Technology Ltd

(57) **Abstract**

The invention relates to a method for operating a gas turbine (10) with flue gas recirculation (FGR), which gas turbine (10) comprises a combustor (12) with one or more burners, which are configured as premix burners to generate a premix flame and are equipped with an additional pilot fuel capability for starting and/or part load stabilizing purposes, whereby part of the flue gas leaving said gas turbine (10) is recirculated back to the entrance (16) of said gas turbine (10) to reduce NOx emission, and whereby pilot fuel is added with a pilot fuel ratio (PFR) to stabilize the premix flames of said one or more burners.

To use FGR without the disadvantage of substantially reducing the stability of the premix flames, for a part load of the gas turbine (10) between 50% and 100% of full load pilot fuel is added with a pilot fuel ratio (PFR) greater than 0 and less than 0.4.

## Description

### BACKGROUND OF THE INVENTION

The present invention relates to the technology of gas turbines. It refers to method for operating a gas turbine with flue gas recirculation according to the preamble of claim 1.

### PRIOR ART

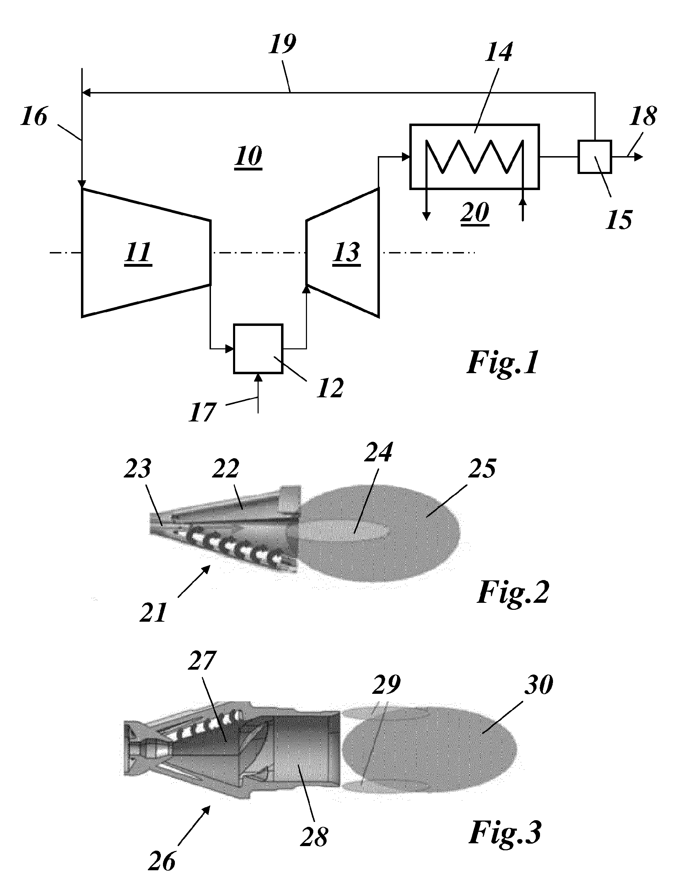

Fig. 1 shows a simplified block diagram for a gas turbine with flue gas recirculation as part of a combined cycle power plant. The gas turbine 10 of Fig. 1 comprises a compressor 11, a combustor 12 and a turbine 13. The compressor 11 compresses air, which enters the machine through an air inlet 16. The compressed air is used to burn a fuel, which is supplied to the combustor 12 by means of a fuel supply 17 an introduced into a combustion chamber by one or more burners (not shown).

The generated hot gas drives turbine 13 and then flows through a subsequent heat recovery steam generator (HRSG) 14, where it is used as a heat source for related water/steam cycle 20 in a combined cycle power plant (CCPP). Finally, the flue gas is guided to a stack 18. On its way part of the flue gas is removed in a flue gas splitter 15 and recirculated back to air inlet 16 via a flue gas recirculation line 19.

Flue gas recirculation (FGR) was originally introduced as technology to reduce cost and size of gas turbines in carbon capture and storage (CCS) plants by enriching the CO₂ concentration and reducing the amount of flue gas. A welcome side effect was the reduced NOₓ emissions at given temperatures as described in several publications (see for example document US 2011/0289898 A1).

Constraints to operation and mitigation have been discussed. With the new boundary conditions for stability and NOₓ production under FGR conditions the operational flexibility can also be increased with respect to low part load operation at compliant emissions.

At a given operating point the operation margin of a gas turbine is usually more constrained with FGR due to reduced blow out stability and increasing CO emissions at low temperatures and low reactivities, which inhibit sufficient burnout.

CO emissions can be mitigated to some extend using increased amount of pilot fuel with a specific pilot fuel ratio (PFR), if that is available for the given burner concept (for example for a so-called Advanced Environmental (AEV)-burner or Environmental (EV)-burner (see for example document EP 2 685 160 A1 and other documents cited therein). The pilot fuel ratio PFR is defined as ratio of the pilot fuel to total fuel mass flow.

An example of an EV-burner is shown in Fig. 2, while Fig. 3 shows an example of an AEV-burner. The EV-burner 21 of Fig. 2 comprises a double cone 22, where air enters through two slots and is premixed with fuel that is injected through openings in said slots. The fuel/air premix generates a premix flame 25, which can be stabilized under part load conditions with a smaller pilot flame 24 that is generated by pilot fuel injection through a central fuel lance 23.

The AEV-burner 26 of Fig. 3 comprises a multi cone 27, where air enters through a plurality of slots and is premixed with fuel that is injected through openings in said slots. The fuel/air premix, after passing a mixing tube 28, generates a premix flame 30, which can be stabilized under part load conditions with smaller pilot flames 29 that are generated by pilot fuel injection at the outlet of mixing tube 28.

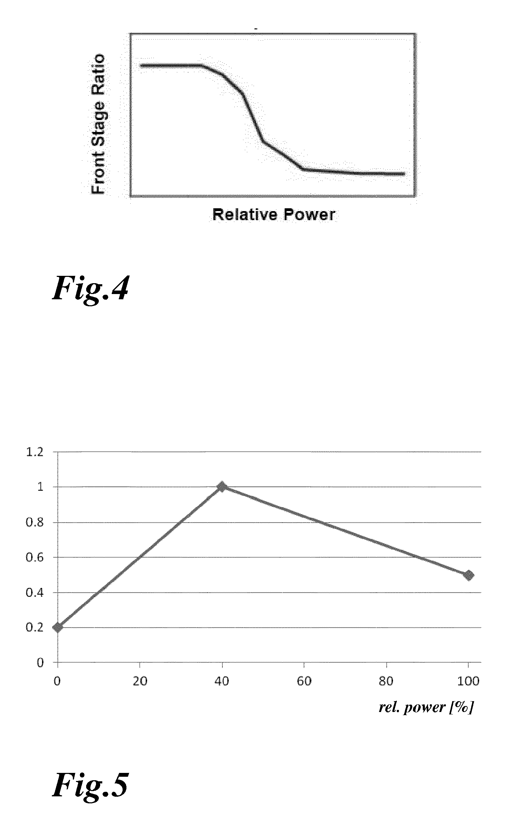

The lean blow out (LBO) stability of a premix burner like the AEV or EV burner is increased at reduced CO emissions at higher O₂ content, at higher PFR ratios and at increased compressor outlet temperature TK2. The CO reduction with PFR is available as mitigation measure for non FGR and FGR conditions. Fig. 4 shows an example of the usual dependence of a front stage ratio FSR on relative power for an AEV burner as shown in Fig. 3, whereby the FSR is equivalent to the PFR.

### SUMMARY OF THE INVENTION

It is an object of the present invention to disclose a method for operating a gas turbine with flue gas recirculation and premix burners without the disadvantage of substantially reducing the stability of the premix flames.

This object is obtained by a method according to Claim 1.

The invention claims a new method for operating a gas turbine with flue gas recirculation (FGR), which gas turbine comprises a combustor with one or more burners, which are configured as premix burners to generate a premix flame and are equipped with an additional pilot fuel capability for starting and/or part load stabilizing purposes, whereby part of the flue gas leaving said gas turbine is recirculated back to the entrance of said gas turbine to reduce NOₓ emission, and whereby pilot fuel is added with a pilot fuel ratio (PFR) to stabilize the premix flames of said one or more burners

It is characterized in that for a part load of the gas turbine between 50% and 100% of full load pilot fuel is added with a pilot fuel ratio (PFR) between 0 and 0.4 or 0 and 40%.

According to an embodiment of the invention pilot fuel is added with a pilot fuel ratio (PFR) between 0.1 and 0.3 or 10 and 30%.

Specifically, pilot fuel is added with a pilot fuel ratio (PFR) between 0.15 and 0.25 or 15 and 25%.

According to another embodiment of the invention for a part load of the gas turbine between 20% and 50% of full load pilot fuel is added with a pilot fuel ratio (PFR), which decreases with increasing part load.

Specifically, pilot fuel is added with a pilot fuel ratio (PFR) of between 0.6 and 0.9 or 60% and 90% at a 20% part load, and the pilot fuel ratio (PFR) is reduced with increasing part load to finally reach its respective value for high loads of 50% part load.

More specifically, pilot fuel is added with a pilot fuel ratio (PFR) of between 0.7 and 0.85 or 70% and 85% at a 20% part load, and the pilot fuel ratio (PFR) is reduced with increasing part load to finally reach its respective value for high loads of 50% part load.

According to a further embodiment of the invention the pilot fuel ratio (PFR) at 20% part load is 2 to 10 times the pilot fuel ratio (PFR) at high loads of 50% part load.

Specifically, the pilot fuel ratio (PFR) at 20% part load is 3 to 5 times the pilot fuel ratio (PFR) at high loads of 50% part load.

More specifically, the pilot fuel ratio (PFR) at 20% part load is 3.5 to 4.5 times the pilot fuel ratio (PFR) at high loads of 50% part load.

According to a just another embodiment of the invention the gas turbine can be operated without flue gas re circulation (FGR), and that the pilot fuel ratio (PFR) is increased about 5 to 30% compared to the value without flue gas recirculation (FGR).

Specifically, the pilot fuel ratio (PFR) is increased about 10 to 20% compared to the value without flue gas recirculation (FGR).

### BRIEF DESCRIPTION OF THE DRAWINGS

The present invention is now to be explained more closely by means of different embodiments and with reference to the attached drawings.
- Fig. 1: shows a simplified block diagram for a gas turbine with flue gas recirculation as part of a combined cycle power plant;
- Fig. 2: shows the principle of a so-called EV-burner;
- Fig. 3: shows the principle of a so-called AEV-burner;
- Fig. 4: shows a simplified diagram of pilot fuel or front stage ratio (PFR or FSR) of the AEV-burner of Fig. 3 in dependence of part load of a gas turbine without flue gas recirculation;
- Fig. 5: shows an example of a controlled flue gas recirculation in dependence of the part load;
- Fig. 6: shows in a diagram the generic operation concept of pilot fuel ratio over relative load for three different cases without, with medium (FGR1) and with high (FGR2) recirculation rate; and
- Fig. 7: shows in a diagram the generic NOₓ emissions over relative load for three different cases without, with medium (FGR1) and with high (FGR2) recirculation rate.

### DETAILED DESCRIPTION OF DIFFERENT EMBODIMENTS OF THE INVENTION

With flue gas recirculation FGR NOₓ emissions are reduced due to lower O₂ contents and consequently lower peak temperatures and reduced NOₓ formation rates. With reduced O₂ the stoichiometric temperatures are reduced. This has a significant impact on the NOₓ formation, which is even larger than the effect for fully premixed flames.

NOₓ production in pilot stabilized flames, as they are used in the AEV burner, can be reduced (due to FGR) by a factor 10 or higher at high pilot fuel ratios PFR. On the other hand increased PFR values are stabilizing the flames, due to their increased reactivity (at near-stoichiometric temperatures). The PFR stabilization effect is still obtained when FGR is active until medium and high FGR-ratios.

While the FGR itself reduces the reactivity stability slightly, this can be compensated be increased PFR value.

The increased PFR value also increases the NOₓ production, which leads in return to a limitation in operational range. The NOₓ increase with PFR is relative strong due to the high stoichiometric temperatures in gas turbines. It scales almost linear with PFR. The slope depends on the maximum stoichiometric NOₓ formation at stoichiometric temperature. With FGR the stoichiometric temperature is reduced (with the reduced available O₂) and consequently also the NOₓ increase with PFR.

Compared to normal air combustion the NOₓ increase with PFR is relatively moderate. The magnitude of the impact that PFR has on stability and its impact on NOₓ formation on the other hand is different with FGR (at lower 02 contents). As a consequence this allows higher PFR values to be used while remaining compliant with NOₓ emissions.

However, the stability gain with increased PFR outweighs the NOₓ penalty, which results in a wider range of compliant operation using more PFR than for the non FGR case. The wider operation range refers to the gas turbine (GT) operated at lower part load powers compared to the non FGR. The advantage of this idea is that the extension of load range can be offered and utilized when FGR is installed.

If used only at part load, the FGR mass flow could be chosen small enough just for that purpose avoiding extra cost of the FGR installation for base load mass flow.

When the combined effect of FGR and PFR is measured, it can be seen that at higher PFR values the overall NOₓ reduction is clearly below 1. This indicates that the emissions and stability are improved for high PFR values. High PFR values are required for stabilisation at low load operation points due to low temperatures and pressures.

For a part load of the gas turbine 10 between 50% and 100% of full load, pilot fuel is added with a PFR between0 and 0.4 (i.e. greater than 0 and below 0.4) or 0 and 40%, preferably between 0.1 and 0.3 or 10 and 30%, and more preferably between 0.15 and 0.25 or 15 and 25%.

For a part load of the gas turbine 10 between 20% and 50% of full load pilot fuel is added with a PFR, which decreases with increasing part load. Preferably, pilot fuel is added with a PFR of between 0.6 and 0.9 or 60% and 90% at a 20% part load, whereby the PFR value is reduced with increasing part load to finally reach its respective value for high loads of 50% part load.

Especially, pilot fuel is added with a PFR of between 0.7 and 0.85 or 70% and 85% at a 20% part load, and the PFR is reduced with increasing part load to finally reach its respective value for high loads of 50% part load.

Furthermore, the PFR at 20% part load is 2 to 10 times the PFR at high loads of 50% part load. Preferably, the PFR at 20% part load is 3 to 5 times the PFR at high loads of 50% part load. More preferably, the PFR at 20% part load is 3.5 to 4.5 times the PFR at high loads of 50% part load.

On the other hand, when the gas turbine 10 can be operated without flue gas recirculation (FGR), the PFR is increased about 5 to 30% compared to the value without flue gas recirculation (FGR). Preferably, the PFR is increased about 10 to 20% compared to the value without flue gas recirculation (FGR).

Measurements show that coming down from high power (> 90% rel. load) the air mass flow and flame temperature are reduced. This leads to decreased pressure and temperature at compressor outlet, PK2 and TK2. All this factors reduce the lean blow out (LBO) stability, requiring an increase of PFR value to keep the flame lit. To maintain stable combustion, the FPR ratio has to be increased.

The operation of the GT at part load is limited by the LBO. The main mitigation measure compensates this by increasing PFR (for non-FGR). The PFR value can be increased until the NOₓ emissions are exceeding the compliance levels.

The FGR can be controlled as a function of load. For example the FGR ratio is very low or zero for low part load. FGR increases with part load to reach a maximum at a relative power of 30 to 50%. FGR then again decreases, when relative power in increase to 100%. Fig. 5 shows such a controlled FGR, whereby the FGR ratio is normalized with its maximum value. The FGR can also be kept at a constant level for high load or can increase towards 100% relative power.

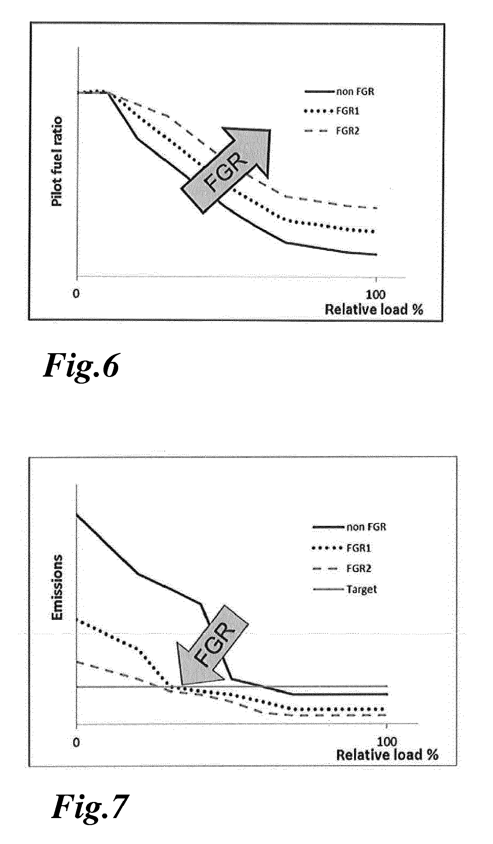

With FGR, NOₓ emissions at high loads are decreased. At part load the NOₓ emissions are also decreased. This allows using more PFR for stabilization and therefore an increase in part load operation towards lower loads. (see Fig. 6).

In addition, increased temperature TK2 is relatively easy with FGR and further helps to stabilize the premix flame. Increased TK2 at part load can be used to increase premix flame stability and to reduce CO emissions.

Increased temperature TK2 at part load has a positive impact on engine and combined cycle efficiency.

Thermo acoustic instabilities are altered with FGR. Simulations indicate a shift of pulsation frequencies and reduction of pulsation amplitudes near the operation points when using FGR for current engines.

This offers the opportunity to widen the operational range of the plant at similar or higher efficiency. The effect will be most pronounced for non-reheat engines with piloted burners. The first combustor of a reheat engine would also benefit from this.

The change in operational range with 30% FGR could be significant: first estimations predict an increase from 45% load for a gas turbine of type GT8C2 down to 30% load. Other gas turbine types are expected to behave similar (see Fig. 7).

With increased PFR value the operation at idle can be maintained stable. Due to the NOₓ reduction effect of FGR emission compliant operation at idle is possible.

### LIST OF REFERENCE NUMERALS

- 10: gas turbine
- 11: compressor
- 12: combustor
- 13: turbine
- 14: heat recovery steam generator (HRSG)
- 15: flue gas splitter
- 16: air linlet
- 17: fuel supply
- 18: stack
- 19: flue gas recirculation line
- 20: water/steam cycle
- 21: EV burner
- 22: double cone
- 23: fuel lance (pilot fuel)
- 24: pilot flame
- 25: premix flame
- 26: AEV burner
- 27: multi cone
- 28: mixing tube
- 29: pilot flame
- 30: premix flame
- FGR: flue gas recirculation
- PFR: pilot fuel ratio

## Claims

1. Method for operating a gas turbine (10) with flue gas recirculation (FGR), which gas turbine (10) comprises a combustor (12) with one or more burners (21, 26), which are configured as premix burners to generate a premix flame (25, 30) and are equipped with an additional pilot fuel capability for starting and/or part load stabilizing purposes, whereby part of the flue gas leaving said gas turbine (10) is recirculated back to the entrance (16) of said gas turbine (10) to reduce NOx emission, and whereby pilot fuel is added with a pilot fuel ratio (PFR) to stabilize the premix flames (25, 30) of said one or more burners (21, 26), **characterized in that** for a part load of the gas turbine (10) between 50% and 100% of full load pilot fuel is added with a pilot fuel ratio (PFR) greater than 0 and less than 0.4.

2. Method as claimed in Claim 1, **characterized in that** pilot fuel is added with a pilot fuel ratio (PFR) between 0.1 and 0.3.

3. Method as claimed in Claim 2, **characterized in that** pilot fuel is added with a pilot fuel ratio (PFR) between 0.15 and 0.25.

4. Method as claimed in Claim 1, **characterized in that** for a part load of the gas turbine (10) between 20% and 50% of full load pilot fuel is added with a pilot fuel ratio (PFR), which decreases with increasing part load.

5. Method as claimed in Claim 4, **characterized in that** pilot fuel is added with a pilot fuel ratio (PFR) of between 0.6 and 0.9 at a 20% part load, and that the pilot fuel ratio (PFR) is reduced with increasing part load to finally reach its respective value for high loads of 50% part load.

6. Method as claimed in Claim 5, **characterized in that** pilot fuel is added with a pilot fuel ratio (PFR) of between 0.7 and 0.85 at a 20% part load, and that the pilot fuel ratio (PFR) is reduced with increasing part load to finally reach its respective value for high loads of 50% part load.

7. Method as claimed in Claim 1, **characterized in that** the pilot fuel ratio (PFR) at 20% part load is 2 to 10 times the pilot fuel ratio (PFR) at high loads of 50% part load.

8. Method as claimed in Claim 7, **characterized in that** the pilot fuel ratio (PFR) at 20% part load is 3 to 5 times the pilot fuel ratio (PFR) at high loads of 50% part load.

9. Method as claimed in Claim 8, **characterized in that** the pilot fuel ratio (PFR) at 20% part load is 3.5 to 4.5 times the pilot fuel ratio (PFR) at high loads of 50% part load.

10. Method as claimed in Claim 1, **characterized in that** the gas turbine (10) can be operated without flue gas re circulation (FGR), and that the pilot fuel ratio (PFR) is increased about 5 to 30% compared to the value without flue gas recirculation (FGR).

11. Method as claimed in Claim 10, **characterized in that** the pilot fuel ratio (PFR) is increased about 10 to 20% compared to the value without flue gas recirculation (FGR).
